# EUROPÄISCHE PATENTSCHRIFT

(11) **EP 0 779 500 B1**
(45) Veröffentlichungstag und Bekanntmachung des Hinweises auf die Patenterteilung: **18.07.2001**
(21) Anmeldenummer: 96119404.0
(22) Anmeldetag: 04.12.1996
(51) Int. Cl.: G01D 11/24, G01D 5/14, G01P 1/02

(54) **Montageverfahren für einen Magnetfeldgeber**
Assembly method for a magnetic sensor
Procédé de montage d'un capteur magnétique

(30) Priorität: 15.12.1995 DE 19546865
(43) Veröffentlichungstag der Anmeldung: 18.06.1997
(73) Patentinhaber: Mannesmann VDO AG, 60326 Frankfurt (DE)
(72) Erfinder: Pfaff, Thomas, 78048 Villingen-Schwenningen (DE)

(56) Entgegenhaltungen:
- DE-A- 4 140 403
- US-A- 5 121 289

## Beschreibung

Erfindung betrifft ein Montageverfahren für einen Magnetfeldgeber mit einem hülsenförmigen Permanentmagneten und einem Hallgenerator, welcher dem Permanentmagneten derart zugeordnet ist, daß die Achse des Permanentmagneten und die Induktionsachse des Hallgenerators im wesentlichen zusammenfallen, mit einem zweiteiligen Gehäuse, dessen einer Gehäuseteil als eine im wesentlichen stabförmige, stirnseitig mit einer magnetisch nicht leitenden Kappe abgeschlossene und mit einem Gewinde und einer dem Gewinde zugeordneten Flanschfläche versehenen Schutzhülse und dessen anderer Gehäuseteil als Steckersockel ausgebildet ist und mit einem mit Leiterbahnen und einer der Signalaufbereitung dienenden elektronischen Schaltung versehenen Träger, auf welchem der Hallgenerator befestigt ist und welcher in die Öffnung des Permanentmagneten derart spielfrei einsetzbar ist, daß zum Zwecke der Justierung der Permanentmagnet und der Träger relativ zueinander verschiebbar sind.

Gattungsgemäße Magnetfeldgeber können im Gegensatz zu Induktivgebern auch zur Erfassung relativ niedriger Drehzahlen bzw. zur Erfassung von Bewegungen im Stillstandsbereich eingesetzt werden. Die besondere Bauform mit einem hülsenförmigen Permanentmagneten hat, wie aus der DE-B 36 38 622 hervorgeht, den Vorteil ein möglichst hohes Nutz-/Störsignal-Verhältnis zu bieten und durch Verschieben des Hallgenerators relativ zum Permanentmagneten und in den Permanentmagneten hinein eine Optimierung des Gebersignals bzw. eine zeitliche Optimierung der Schaltpunkte des Hallgenerators vornehmen zu können. Ferner sei erwähnt, daß gattungsgemäß erwähnte stabförmige Geberarchitekturen in der Regel dort erforderlich sind, wo, wie beispielsweise bei Fahrzeuggetrieben, zwischen dem abzutastenden Objekt und der Möglichkeit den Geber zu befestigen, eine gewisse Distanz überbrückt werden muß. Das heißt, der aus dem Hallgenerator und dem Permanentmagneten bestehende Kopf des Gebers muß, um ein möglichst hohes Nutzsignal zu erzielen, so nahe wie möglich an dem abzutastenden Getrieberad oder einem speziellen Taktrad positioniert werden, der Geber selbst kann aber nur am Gehäuse des betreffenden Getriebes befestigt werden. Außerdem läßt sich die am Geber vorzusehende Steckerverbindung oder eine milieugerechte Kabelzuführung nur außerhalb des Getriebegehäuses realisieren. Andererseits hat das Geberprinzip in der Serienfertigung wegen der außergewöhnlich empfindlichen axialen Lagejustierung zwischen dem Permanentmagneten und dem Hallgenerator erhebliche Schwierigkeiten bereitet, so daß mit der DE-B-41 40 403 vorgeschlagen wurde zwischen dem in den Permanentmagneten eingreifenden und den Hallgenerator halternden Träger und dem Permanentmagneten ein Schiebesitz bzw. eine verschiebbare Preßpassung vorzusehen. Dadurch wird der Kopf des Gebers feinfühlig justierbar und kann aufgrund der gegebenen Selbstsicherung von Träger und Permanentmagnet für das nach dem Justieren folgende Fixieren der justierten Funktionsstellung durch Kleben auch gehandhabt werden.

Vorzugsweise stellt der Träger einen fingerförmigen Fortsatz einer Leiterplatte dar, auf welcher außer dem Hallgenerator die elektrischen Bauteile des Gebers sowie die Geberkontakte angeordnet sind. Letztere ragen in einen mit der Leiterplatte verbindbaren Steckersockel hinein. Diese aus dem Kopf des Gebers, der Leiterplatte und dem Steckersockel gebildete Baugruppe wird als Einschub in die zylindrische, frontseitig durch eine nichtmagnetische Kappe abgeschlossene Schutzhülse eingesteckt und der Steckersockel mit der Schutzhülse verbördelt. Bei den auf diese Weise hergestellten Gebern wurden trotz der zuvor vorgenommenen Lagejustierung von Permanentmagnet und Hallgenerator und somit des elektromagnetischen Abgleichs des Sensorkopfes des Gebers und der auf der Leiterplatte angeordneten Schaltung zur Signalaufbereitung relativ starke Schwankungen der Signalform und der Signallage bis hin zu Signalausfällen festgestellt. Diese Störungen werden, da der Stirnbereich der magnetisch leitenden Schutzhülse sich in Wirkungsnähe des Hallgenerators befindet, nachweislich dadurch verursacht, daß die magnetische Feldstärke der verwendeten Permanentmagnete erhebliche Streuungen aufweist und beim Zusammenbau des Gebers die Lage des Hallgenerators in Bezug auf den Stirnbereich der Schutzhülse durch mehrere Toleranzfelder und durch Verformungsabweichungen, die beim Verbördeln des Steckersockels mit der Schutzhülse entstehen, beeinflußt wird. Dabei können die Lageabweichungen Werte >1 mm annehmen.

Es war somit die Aufgabe gestellt, für einen Magnetfeldgeber der gattungsgemäßen Art, die funktionelle Reproduzierbarkeit zu verbessern, und zwar unter Großserienbedingungen, das heißt unter Beibehaltung seriengerechter Toleranzen bezüglich der einzelnen Bauteile des Gebers.

Die Lösung der Aufgabe beschreibt der Patentanspruch 1. Eine vorteilhafte Einrichtung zur Durchführung des elektromagnetischen Ableichs der Geber in Verbindung mit dem erfindungsgemäßen Montageverfahren geht aus den Ansprüchen 2 und 3 hervor.

Der entscheidende Vorteil des gefundenen Montageverfahrens ist darin zu sehen, daß der elektromagnetische Abgleich der Geber erst nach dem Verbördeln von Schutzhülse und Steckersockel erfolgt und somit sämtliche den Abgleich beeinflussenden baulichen Toleranzen und durch Verformung entstehende Maßabweichungen beim Abgleich berücksichtigt werden. Gleichzeitig ermöglicht das Montageverfahren einen einbauidentischen Abgleich der elektromagnetischen Verhältnisse der Geber. Dabei wird mittels einer Gewindespindel ein an der Stirnseite des auf einem Klemmstück befestigten Permanentmagneten angreifender Schieber verstellt. Mit einer Ausbildung der Gewindespindel derart, daß sie keine Selbsthemmung aufweist und dem Schieber eine Feder zugeordnet ist, läßt sich eine erreichte Abgleichstellung in einfacher Weise durch Loslassen des der Gewindespindel zugeordneten Stellorgans bis zum endgültigen Fixieren durch einen schnell reagierenden Kleber weitgehend störungsfrei festlegen.

Im folgenden sei die Erfindung anhand von Zeichnungen näher erläutert. Es zeigen:

Figur 1 einen Längsschnitt eines Magnetfeldgebers der gattungsgemäßen Art im einbaufertigen Zustand.

Figur 2 eine weitgehend schematische Draufsicht einer Abgleicheinrichtung und eines in der Abgleicheinrichtung aufgenommenen Magnetfeldgebers mit einer gegenüber dem Geber gemäß Figur 1 längeren Schutzhülse.

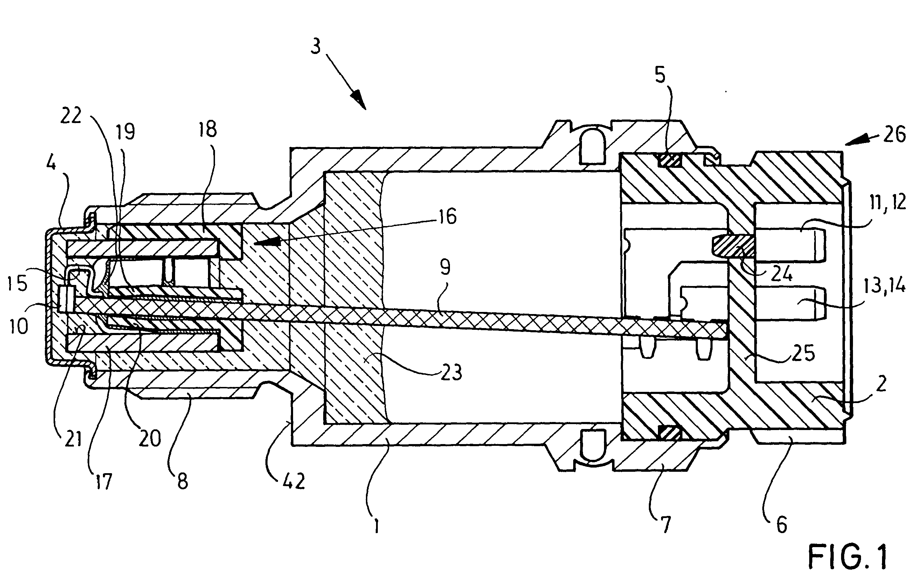

Die Figur 1 zeigt, daß im wesentlichen eine Schutzhülse 1 und ein Steckersockel 2 das Gehäuse des dargestellten Magnetfeldgebers 3 bilden, welches frontseitig mittels einer mit der Schutzhülse 1 verbördelten magnetisch nicht leitenden Kappe 4 verschlossen ist. Auch der Steckersockel 2 ist mittels einer Bördelverbindung an der Schutzhülse 1 befestigt. Ein zwischengeschalteter O-Ring 5 dient als Dichtelement. Mit 6 sind an der Mantelfläche des Steckersockels 2 angeformte Renkverbindungsmittel bezeichnet, welche der Befestigung einer Überwurfmutter dienen, die einem nicht dargestellten, mit dem Magnetfeldgeber 3 zu verbindenden Kabel zugeordnet ist. An der Schutzhülse 1 ist ein mit 7 bezeichneter Sechskant ausgebildet, der dem Ansetzen eines Werkzeugs beim Befestigen des Magnetfeldgebers 3 am Einbauort beispielsweise am Getriebegehäuse eines Kraftfahrzeugs dient. Hierfür ist ein an der Schutzhülse 1 ausgebildetes Gewinde 8 vorgesehen.

Wie aus der Figur 1 ferner ersichtlich ist, ist innerhalb des Gehäuses 1, 2 des Magnetfeldgebers 3 eine Leiterplatte als Träger 9 für die elektrischen und elektronischen Bauelemente angeordnet, von denen der Einfachheit halber lediglich ein stirnseitig am Träger 9 durch Kleben befestigter Hallgenerator 10 und vier als Messerkontakte ausgebildete Geberkontakte 11, 12 und 13, 14 dargestellt sind. Selbstverständlich sind die Geberkontakte 11, 12 und 13, 14 sowie der Hallgenerator 10 mit auf dem Träger 9 aufgebrachten, in Figur 1 nicht darstellbaren Leiterbahnen elektrisch leitend verbunden. Beim Hallgenerator 10 erfolgt die Kontaktierung mit den Leiterbahnen mittels Kontaktbeine 15, die Geberkontakte 11, 12 und 13, 14 sind unmittelbar in den Träger 9 eingepreßt. Auf dem Träger 9 ist außerdem ein Klemmstück 16 angeordnet, welches in einen hülsenförmigen Permanentmagneten 17 eingepreßt ist und mittels den Permanentmagneten 17 außen umgreifenden Fingern, von denen einer, 18, dargestellt ist, eine Zentrierung des Geberkopfes in der Schutzhülse 1 bietet. Mit 19 und 20 sind an dem Klemmstück 16 angeformte, federnde Backen bezeichnet, die einen für die Justierung erforderlichen Schiebesitz zwischen dem Träger 9 und dem Permanentmagneten 17 bewirken. In diesem Zusammenhang sei erwähnt, daß der Träger 9 gestuft ausgebildet ist, das heißt, daß im wesentlichen symmetrisch zur Längsachse ein in Figur 1 nicht sichtbarer fingerförmiger Ansatz vorgesehen ist, dessen Breite kleiner ist als der Durchmesser der Öffnung 21 des Permanentmagneten 17.

Mit 22 ist nach dem Justieren angebrachter Klebstoff bezeichnet. 23 stellt eine elastische Vergußmasse dar, mit welcher der als Sensor dienende Kopf des Magnetfeldgebers 3 in der Schutzhülse 1 fixiert ist. Nach dem Eingeben der Vergußmasse 23 in den ansonsten fertiggestellten Magnetfeldgeber 3 wird eine hierfür vorgesehene Öffnung mittels eines Stöpsels 24 verschlossen und der Magnetfeldgeber 3 geschwenkt, so daß die auf dem Träger 9 befindlichen elektronischen Bauteile und die Innenwände des Steckersockels 2 von der Vergußmasse 23 benetzt und eingebettet sowie die in der Zwischenwand 25 des Steckersockels 2 für den Durchtritt der Geberkontakte 11, 12 und 13, 14 vorgesehenen Schlitze abgedichtet werden.

Bei der Montage des Magnetfeldgebers 3 wird zunächst aus dem Steckersockel 2, dem Träger 9 mit den darauf angebrachten Bauelementen und der Klemmstück/Permanentmagnet-Baugruppe 16, 17 eine einen Einschub 26 darstellende Baueinheit gebildet. Dabei werden zunächst der mit den elektrischen/elektronischen Bauelementen und den Geberkontakten 11, 12, 13, 14 bestückte Träger 9 in den Steckersockel 2, in welchem dem Träger 9 zugeordnete Nute ausgebildet sind, eingepreßt. Danach wird das Klemmstück 16 auf den Träger 9 aufgeschoben und der Hallgenerator 10, dessen Kontaktbeine 15 in der erforderlichen Weise abgehängt worden sind, an dem Träger 9 durch Löten und Kleben sowie nachfolgendes Aushärten des Klebers befestigt. Mit dem nächsten Montageschritt, dem Zusammenfügen von Permanentmagnet 17 und Klemmstück 16 ist der Einschub 26 komplettiert. Nachfolgend wird der Einschub 26 in die Schutzhülse 1 eingesetzt und die Schutzhülse 1 mit dem Steckersockel 2 verbördelt. In diesem Zustand - der Magnetfeldgeber 3 ist stirnseitig noch offen - wird der Magnetfeldgeber 3 in eine Abgleicheinrichtung 27 eingesetzt. Nach dem Abgleich, bei dem der Permanentmagnet 17 bzw. das den Permanentmagneten 17 tragende Klemmstück 16 axial verschoben wird, wird der Magnetfeldgeber 3 der Abgleicheinrichtung 27 entnommen und das Klemmstück 16 mit dem Träger 9 verklebt. Nach dem Aushärten des Klebers wird die Kappe 4 mit der Schutzhülse 1 verbördelt. Nachfolgend wird der Magnetfeldgeber 3 teilweise mit Gießharz gefüllt und zur Benetzung der Innenflächen geschwenkt nachdem die Einfüllöffnung geschlossen wurde. Nach einem Temperaturwechseltest und einer Dichtigkeitsprüfung ist der Magnetfeldgeber 3 dann verkaufsfertig.

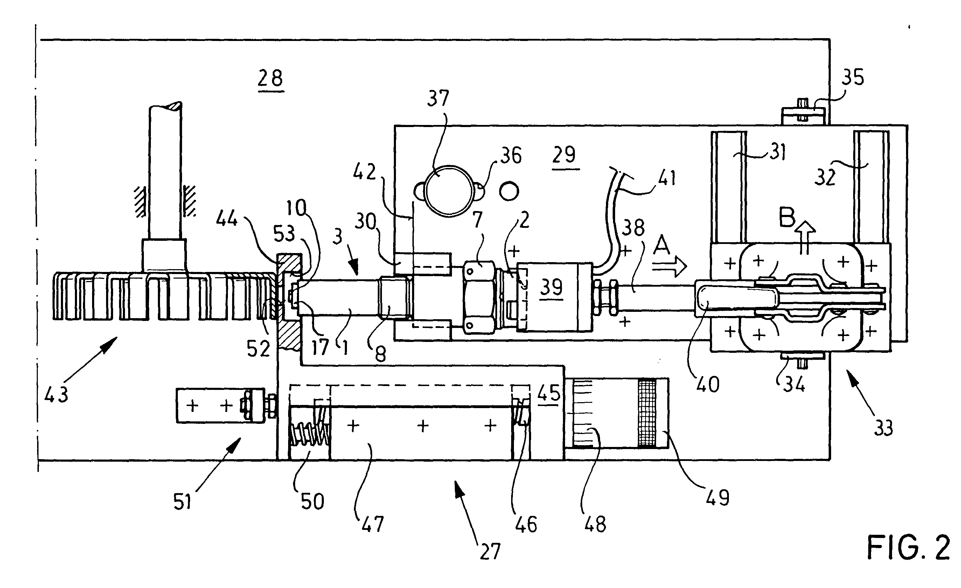

Gemäß der Figur 2 umfaßt die Abgleicheinrichtung 27 eine auf einer Grundplatte 28 in entsprechend unterschiedlicher Längen der Schutzhülsen 1 der Magnetfeldgeber 3 verschiedenen Positionen befestigbare Aufnahmevorrichtung 29. Letztere ist mit einem Halter 30 und mit Schienen 31, 32 versehen, auf denen eine Spannvorrichtung 33 quer zur Achse eines abzugleichenden Magnetfeldgebers 3 verschiebbar ist, wobei Anschläge 34, 35 die Bewegung der Spannvorrichtung 33 begrenzen. Mit 36 ist eine von mehreren Durchgangsbohrungen bezeichnet, welche zusammen mit nicht sichtbaren, Paßstiften zugeordneten Bohrungen der Positionierung der Aufnahmevorrichtung 29 entsprechend der unterschiedlichen Längen der Magnetfeldgeber 3 auf der Grundplatte 28 dienen. Eine Rändelschraube 37 dient dem Festhalten der Aufnahmevorrichtung 29 rechtwinklig zur Grundplatte 28. Der Spannvorrichtung 33, die beispielsweise nach dem Kniehebelprinzip funktioniert, ist eine Schubstange 38 zugeordnet, an deren freiem Ende ein Kupplungsteil 39 justierbar befestigt ist. 40 stellt einen Knebel zur Betätigung der Spannvorrichtung 33 dar. In Verbindung mit dem Kupplungsteil 39, welches, wie die Figur 2 zeigt, den Steckersockel 2 des in dem Halter 30 aufgenommenen Magnetfeldgebers 3 umgreift, hat die Spannvorrichtung 33 die Aufgabe, den Magnetfeldgeber 3 während des Abgleichens in der einbauidentischen Position axial zu sichern und die elektrische Verbindung zwischen den Geberkontakten 11, 12 und 13, 14 beispielsweise mit einem nicht dargestellten Oszillographen zu gewährleisten. Mit 41 ist ein das Kupplungsteil 39 mit dem Oszillographen verbindendes Kabel bezeichnet. Ferner sei erwähnt, daß der Halter 30 derart ausgebildet ist, daß sich der axial lose einsteckbare Magnetfeldgeber 3 mit der an der Schutzhülse ausgebildeten Flanschfläche 42 abstützen kann. In Verbindung mit einem der Abgleicheinrichtung 27 zugeordneten Impulsrades 43 wird unter Berücksichtigung eines erforderlichen Luftspaltes die bereits erwähnte einbauidentische Abgleichposition geschaffen. In den Luftspalt greift ein Schieber 44 ein, der an einem Schlitten 45 ausgebildet ist. Letzterer ist parallel zur Achse des abzugleichenden Magnetfeldgebers 3 verschiebbar geführt. Die Stellbewegung erfolgt mittels einer Kugelumlaufspindel 46, die in einem mit der Grundplatte 28 verbundenen Lagerbock 47 gelagert und mittels eines mit einer Skale 48 versehenen Stellelementes 49 einstellbar ist. Ein am Schlitten 45 angreifende und sich am Lagerbock 47 abstützende Druckfeder 50 dient dem Rückführen des Schlittens 45, was beim Loslassen des Stellelementes 49 aufgrund der nicht vorhandenen Selbsthemmung der Kugelumlaufspindel 46 selbsttätig erfolgt. Mit 51 ist ein dem Schlitten 45 zugeordneter einstellbarer Anschlag bezeichnet.

Der Vollständigkeit halber sei noch erwähnt, daß in dem Schieber 44 eine Öffnung 52 vorgesehen ist, damit der Hallgenerator 10, während der Schieber 44 beim Abgleich an der Stirnfläche des Permanentmagneten 17 angreift, berührungsfrei bleibt. Selbstverständlich ist der Permanentmagnet 17 vor dem Abgleich derart positioniert, daß er beim Abgleich in jedem Falle weiter in die Schutzhülse 1 hinein verschoben werden muß. Aus Stabilitätsgründen ist der Schieber 44 breiter ausgebildet als der Luftspalt, so daß für ein berührungsfreies Eintauchen der Schutzhülse 1 in den Schieber 44 eine geeignete Senkung 53 vorgesehen ist. Nach dem Erzielen des Abgleichs wird durch Betätigen des Knebels 40 die Spannvorrichtung 30 gelöst und das Kupplungsteil 39 in Pfeilrichtung A zurückgenommen. Nach einem nachfolgenden Verschieben der Spannvorrichtung 33 in Pfeilrichtung B kann der abgeglichene Magnetfeldgeber 3 dem Halter 30 in axialer Richtung entnommen und der bereits beschriebenen Weiterbehandlung zugeführt werden.

## Patentansprüche

1. Montageverfahren für einen Magnetfeldgeber mit einem hülsenförmigen Permanentmagneten und einem Hallgenerator, welcher dem Permanentmagneten derart zugeordnet ist, daß die Achse des Permanentmagneten und die Induktionsachse des Hallgenerators im wesentlichen zusammenfallen, mit einem zweiteiligen Gehäuse, dessen einer Gehäuseteil als eine im wesentlichen stabförmige, stirnseitig mit einer magnetisch nicht leitenden Kappe abgeschlossene und mit einem Gewinde und einer dem Gewinde zugeordneten Flanschfläche versehenen Schutzhülse und dessen anderer Gehäuseteil als Steckersockel ausgebildet ist und mit einem mit Leiterbahnen und einer der Signalaufbereitung dienenden elektronischen Schaltung versehenen Träger, auf welchem der Hallgenerator befestigt ist und welcher in die Öffnung des Permanentmagneten derart spielfrei einsetzbar ist, daß zum Zwecke der Justierung der Permanentmagnet und der Träger relativ zueinander verschiebbar sind,
**dadurch gekennzeichnet,**
daß der mit den Bauteilen der elektronischen Schaltung bestückte und mit dem Steckersockel (2) fest verbundene Träger (9), dem der Permanentmagnet (17) axial verschiebbar zugeordnet ist, in die Schutzhülse (1) eingeführt und der Steckersockel (2) mit der Schutzhülse (1) verbördelt wird,
daß die entstandene Baugruppe, bei der der Abstand zwischen der Stirnfläche des Permanentmagneten (17) und der Flanschfläche (42) der Schutzhülse (1) größer ist als alle nach dem Justieren möglichen Abstände mittels der Schutzhülse (1) in einer Abgleicheinrichtung (27), welche ein Impulsrad (43) und einen Halter (30) mit einer der Flanschfläche (42) zugeordneten Anschlagfläche aufweist, einbauidentisch befestigt wird,
daß der Permanentmagnet (17) mittels eines an seiner Stirnseite angreifenden Schiebers (44) axial bis zum Erreichen eines festgelegten Abgleichwertes verschoben und die abgeglichene Stellung durch Verkleben des Permanentmagneten (17) auf dem Träger (9) fixiert wird,
daß nachfolgend die nicht magnetische Kappe (4) an der Stirnseite der Schutzhülse (1) angebördelt wird und
daß der Magnetfeldgeber (3) durch Einfüllen von Vergußmasse (23) und Verschließen der Einfüllöffnung komplettiert wird.

2. Abgleicheinrichtung zur Durchführung des nach dem Montageverfahren nach Anspruch 1 vorgesehenen Abgleichs von Magnetfeldgebern,
**dadurch gekennzeichnet,**
daß der zwischen dem Impulsrad (43) und der Stirnseite des Magnetfeldgebers (3) eingreifende Schieber (44) an einem parallel zur Achse eines abzugleichenden Magnetfeldgebers (3) verschiebbar gelagerten Schlitten (45) angeordnet ist,
daß zur Verschiebung des Schlittens (45) eine Kugelumlaufspindel (46) Anwendung findet, welcher ein mit einer Skale (48) versehenes Stellelement (49) zugeordnet ist und
daß an dem Schlitten (45) eine Feder (50) angreift derart, daß der Schlitten (45) bei Nichtbetätigen des Stellelementes (49) an einem Anschlag (51) anliegt und sich der Schieber (44) in einer von der Stirnseite des Magnetfeldgebers (3) abgewandten Position befindet.

3. Abgleicheinrichtung zur Durchführung des nach dem Montageverfahren nach Anspruch 1 vorgesehenen Abgleichs von Magnetfeldgebern,
**dadurch gekennzeichnet,**
daß ein zu einem im Halter (30) aufgenommenen Magnetfeldgeber (3) axial verschiebbares und mit dem Steckersockel (2) des Magnetfeldgebers (3) in Wirkverbindung bringbares Kupplungsteil (39) vorgesehen ist,
daß dem Kupplungsteil (39) eine Spannvorrichtung zugeordnet ist, und
daß die das Kupplungsteil (39) tragende Spannvorrichtung (33) quer zur Achse des Magnetfeldgebers (3) verschiebbar gelagert ist.

## Claims

1. Assembly method for a magnetic field sensor having a permanent magnet in the form of a sleeve and having a Hall generator which is associated with the permanent magnet in such a manner that the axis of the permanent magnet and the induction axis of the Hall generator essentially coincide, having a two-piece housing, one housing piece of which is in the form of a protective sleeve which is essentially in the form of a bar and is closed off at the end by a magnetically impermeable cap and is provided with a thread and a flange surface associated with the thread, and whose other housing part is in the form of a plug base, and having a mount which is provided with conductor tracks and an electronic circuit which is used for signal preprocessing, on which mount the Hall generator is mounted and which mount can be inserted into the opening in the permanent magnet without any play in such a manner that the permanent magnet and the mount can be moved relative to one another for the purpose of adjustment,
**characterized**
in that the mount (9), which is fitted with the components of the electronic circuit, is firmly connected to the plug base (2) and with which the permanent magnet (17) is associated such that it can be moved axially, is inserted into the protective sleeve (1) and the plug base (2) together with the protective sleeve (1) is peened over,
in that the resultant assembly, in which the distance between the end surface of the permanent magnet (17) and the flange surface (42) of the protective sleeve (1) is greater than all the possible distances after adjustment, is mounted with an identical installation by means of the protective sleeve (1) in an adjustment device (27) which has a pulse wheel (43) and a holder (30) with a stop surface associated with the flange surface (42),
in that the permanent magnet (17) is moved axially, by means of a slide (44) which acts on its end face, until a defined adjusted value is reached, and the adjusted position is fixed by bonding the permanent magnet (17) on the mount (9),
in that the nonmagnetic cap (4) is then peened over on the end face of the protective sleeve (1), and
in that the magnetic field sensor (3) is completed by being filled with potting compound (23) and by sealing the filling opening.

2. Adjustment device for carrying out the adjustment of magnetic field sensors as provided in the assembly method according to Claim 1,
**characterized**
in that the slide (44), which engages between the pulse wheel (43) and the end face of the magnetic field sensor (3), is arranged on a sliding carriage (45) which is mounted such that it can be moved parallel to the axis of a magnetic field sensor (3) which is to be adjusted,
in that a recirculating ball spindle (46) is used to move the sliding carriage (45) and is associated with an adjusting element (49) which is provided with a scale (48), and
in that a spring (50) acts on the sliding carriage (45) in such a manner that, when the adjusting element (49) is not being operated, the sliding carriage (45) rests against a stop (51) and the slide (44) is located in a position facing away from the end face of the magnetic field sensor (3).

3. Adjustment device for carrying out the adjustment of magnetic field sensors as provided in the assembly method according to Claim 1,
**characterized**
in that a coupling part (39) is provided which can be moved axially with respect to a magnetic field sensor (3) that is held in the holder (30) and can be operatively connected to the plug base (2) of the magnetic field sensor (3),
in that the coupling part (39) has an associated clamping apparatus, and
in that the clamping apparatus (33) to which the coupling part (39) is fitted is mounted such that it can be moved transversely with respect to the axis of the magnetic field sensor (3).

## Revendications

1. Procédé de montage pour un générateur de champ magnétique avec un aimant permanent en forme de douille et un générateur à effet Hall qui est associé audit générateur de champ magnétique de telle sorte que l'axe dudit aimant permanent coïncide, pour l'essentiel, avec l'axe d'induction dudit générateur à effet Hall, avec un boîtier en deux parties, dont l'une des parties de boîtier est réalisée comme douille de protection, pour l'essentiel en forme de bâtonnet, obturée du côté frontal par un capot non magnétique et équipée d'un filetage et d'un élément de bride associé audit filetage, et dont l'autre partie de boîtier est réalisée comme socle à fiches de contact, et avec un support, équipé de bandes conductrices et d'un montage électronique servant à la mise en forme des signaux, sur lequel est fixé le générateur à effet Hall et qui peut être inséré sans jeu dans l'ouverture de l'aimant permanent de telle sorte que, aux fins d'ajustage, ledit aimant permanent et ledit support peuvent coulisser l'un par rapport à l'autre,
caractérisé par le fait
que, équipé des composants du montage électronique et rigidement assemblé avec le socle à fiches de contact (2), le support (9) auquel est associé l'aimant permanent (17) monté à déplacement axial, sera introduit dans la douille de protection (1) et que ledit socle à fiches de contact (2) sera serti sur ladite douille de protection (1),
que le sous-ensemble ainsi créé, dans lequel l'espacement entre la face frontale de l'aimant permanent (17) et la face de bride (42) de la douille de protection (1) est plus grand que tous les espacements possibles après l'ajustage, sera fixé, d'une manière identique à celle de l'encastrement, au moyen de la douille de protection (1), dans un dispositif d'alignement (27), qui présente une roue génératrice d'impulsions (43) et un support (30) avec une face de butée associée à la face de bride (42),
que, au moyen d'un curseur (44) agissant sur sa face frontale, l'aimant permanent (17) peut être déplacé dans le sens axial jusqu'à l'obtention d'une valeur d'alignement déterminée et que la position alignée sera fixée par collage dudit aimant permanent (17) sur le support (9),
que le capot non magnétique (4) sera ensuite serti sur la face frontale de la douille de protection (1) et
que le générateur de champ magnétique (3) sera complété par le remplissage avec une masse de scellement (23) et l'obturation de l'ouverture de remplissage.

2. Dispositif d'alignement pour l'exécution de l'alignement de générateurs de champ magnétique prévu conformément au procédé de montage selon la revendication 1,
caractérisé par le fait
que le curseur (44) s'engageant entre la roue génératrice d'impulsions (43) et la face frontale du générateur de champ magnétique (3) est disposé sur un chariot (45) monté mobile parallèlement à l'axe d'un générateur de champ magnétique (3) à aligner,
que, pour le déplacement du chariot (45), est mise en oeuvre une vis à billes (46) à laquelle est associé un élément de réglage (49) pourvu d'une échelle graduée (48) et
que sur le chariot (45) agit un ressort (50) de telle sorte que, en cas de non actionnement de l'élément de réglage (49), ledit chariot (45) appuie contre une butée (51) et que le curseur (44) se trouve dans une position tournant le dos à la face frontale du générateur de champ magnétique (3).

3. Dispositif d'alignement pour l'exécution de l'alignement de générateurs de champ magnétique prévu conformément au procédé de montage selon la revendication 1,
caractérisé par le fait
qu'il est prévu un élément d'accouplement (39) déplaçable dans le sens axial par rapport à un générateur de champ magnétique (3) logé dans le support (30) et pouvant être fonctionnellement relié au socle à fiches de contact (2) dudit générateur de champ magnétique (3),
qu'audit élément d'accouplement (39) est associé un dispositif de serrage (33) et
que ledit dispositif de serrage (33) portant l'élément d'accouplement (39) est monté mobile dans le sens transversal par rapport à l'axe du générateur de champ magnétique (3).
